# EUROPÄISCHE PATENTSCHRIFT

(11) **EP 1 323 959 B1**
(45) Veröffentlichungstag und Bekanntmachung des Hinweises auf die Patenterteilung: **11.05.2005**
(21) Anmeldenummer: 02026334.9
(22) Anmeldetag: 21.11.2002
(51) Int. Cl.: F16J 15/34

(54) **Vorspanneinrichtung für eine Gleitringdichtungsanordnung**
Pretensioning device for a face seal
Dispositif de précontrainte pour une garniture à annaux de glissement

(30) Priorität: 27.12.2001 DE 20120966 U; 14.08.2002 DE 20212542 U
(43) Veröffentlichungstag der Anmeldung: 02.07.2003
(73) Patentinhaber: Burgmann Dichtungswerke GmbH & Co. KG, 82515 Wolfratshausen (DE)
(72) Erfinder: Feigl, Peter, 82335 Höhenrain (DE); Simon, Clemens, 82319 Starnberg (DE)
(74) Vertreter: Schmidt, Horst, Dr.

(56) Entgegenhaltungen:
- EP-A- 1 024 319
- CH-A- 426 400
- DE-B- 1 016 518
- DE-U- 7 404 061
- DE-U- 29 714 224
- FR-A- 1 326 296
- US-A- 2 871 040

## Beschreibung

Die Erfindung betrifft eine Vorspanneinrichtung für eine Gleitringdichtungsanordnung zum Aufbringen einer Vorspannkraft zwischen einem Paar zusammenwirkender Gleitringe. Eine derartige Vorspanneinrichtung wird durch das Dokument CH-A-426 400 offenbart.

Die Erfindung betrifft insbesondere Massnahmen an Gleitringdichtungsanordnungen, die mit Hilfe von Robotermaschinen an automatischen Fertigungsanlagen zusammengesetzt und an einer abzudichtenden Gerätschaft, z.B. einem Kompressorgehäuse montiert werden können.

Der Erfindung liegt die Aufgabe zugrunde, eine Vorspanneinrichtung zum vollautomatischen Zusammenbau von Gleitringdichtungsanordnungen, insbesondere solcher zu schaffen, die zum Einbau in Gerätschaften, z.B. Kältemittelkompressoren für Klimaanlagen von Kraftfahrzeugen geeignet sind.

Diese Aufgabe wird durch die Merkmale des Patentanspruchs 1 gelöst. Ausgangspunkt der Erfindung ist eine Gleitringdichtungsanordnung, bei der die gegenseitige ausgerichtete Lagebeziehung der Gleitringe untereinander vor und während der Montage mittels eines Montagehilfsmittels in Gestalt einer Montagehülse eingehalten wird. Die erforderliche Vorspannkraft, mit der die Gleitringe bei Betrieb in dichtendem Eingriff miteinander gepresst werden, wird dabei durch eine Vorspanneinrichtung mit einem Stützelement und einem Mitnehmerelement aufgebracht, zwischen denen eine Vorspannfeder angeordnet ist. Das Stützelement mit der Vorspannfeder kann am rotierende Gleitring der Gleitringdichtungsanordnung mittels Klemmen angeklemmt werden. Vorzugsweise erfolgt dies, nachdem die zusammenwirkenden Gleitringe ihre gegenseitigen Positionen auf der Montagehülse eingenommen haben oder die Gleitringe in dieser Lagebeziehung zueinander auf einer Welle aufgesetzt wurden.

Es wurde im Rahmen von Versuchen zur weiteren Verbesserung der Erfindung im Hinblick auf eine verbesserte Handhabung der einzelnen Aufbauteile der Gleitringdichtungsanordnung mittels Robotermontageautomaten festgestellt, dass gemäss einer bevorzugten Weiterbildung der Erfindung nach dem Anspruch 2 die Montage der Vorspanneinrichtung selbst als auch deren Anbau an der Gleitringdichtungsanordnung dadurch wesentlich vereinfacht werden können, wenn diese als eigenständige Montageeinheit bereitgestellt wird, indem die axiale Relativbewegung der Stützelemente, zwischen denen die Vorspannfeder axial abgestützt ist, in einer Richtung weg voneinander nicht nur grundsätzlich, sondern auf eine solche axiale Wegstrecke begrenzt ist, dass die Vorspannfeder nicht in einen gänzlich entspannten Zustand gelangen kann und damit in der Montageeinheit eine gewisse, jedoch reduzierte Federkraft wirkt, die beide Stützelemente lagemässig zueinander festlegt und eine stabile Einheit schafft. Diese kann von Handhabungsmaschinen erfasst und bewegt werden, ohne dass die Gefahr besteht, dass die Aufbauteile der Vorspanneinrichtung aus ihrer gewünschten gegenseitigen Ausrichtung vor oder während der Montage an einer Gleitringdichtungsanordnung, des Transportes oder der Lagerhaltung herausgelangen können.

Die Vorspannfeder gelangt in ihren endgültigen Betriebszustand nach der Montage an der Gleitringdichtungsanordnung, da die Feder dann um ein Mass zusammengedrückt wird, dass die lagefixierende Beziehung der Stützelemente aufgehoben wird, so dass die Vorspannfeder ihre vorgegebene Funktion innerhalb der Gleitringdichtungsanordnung erfüllen kann. Die Vorspanneinrichtung erfüllt ferner vorzugsweise gleichzeitig die Funktion der Übertragung einer Drehkraft auf den betreffenden Gleitring, indem die lagefixierenden Vorsprungsmittel an diametral gegenüberliegenden, von dem einen Stützelement in Richtung auf das andere Stützelement sich axial erstreckenden Halterungen vorgesehen sind, die in dazu ausgerichteten Aussparungen im vorzuspannenden Gleitring axial beweglich aufnehmbar sind. Diese Anordnung wirkt daher ähnlich einer Klauenkupplung. Die Stützelemente können gemäss einer anderen vorteilhaften Weiterbildung der Erfindung Stanzteile aus einem metallischen Material darstellen, so dass sich die Stützelemente in besonders wirtschaftlicher Weise bereitstellen lassen. Bezüglich andere Weiterbildungen der Erfindung wird auf die Ansprüche verwiesen.

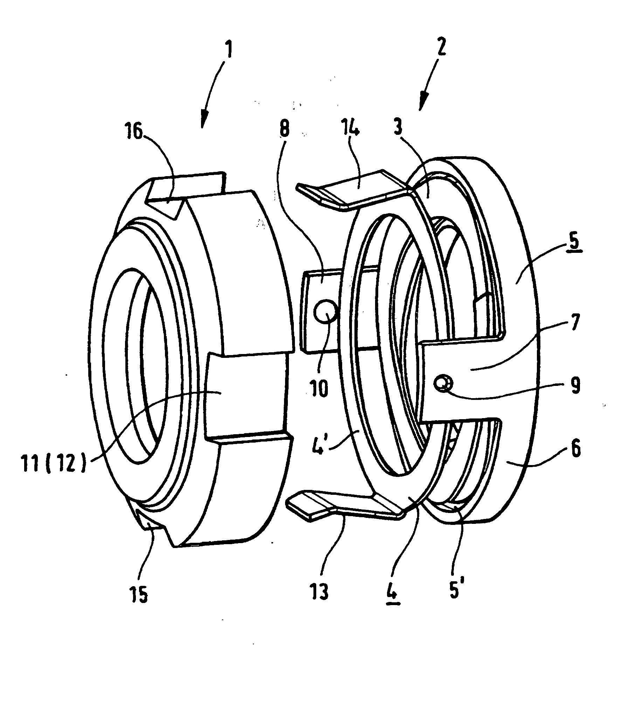

Die Erfindung wird nachfolgend anhand der Zeichnung und einer Ausführungsform näher erläutert. Die Zeichnung zeigt teilweise schematisch eine erfindungsgemäss aufgebaute Vorspanneinrichtung in perspektivischer Ansicht zusammen mit einem mit einer Vorspannkraft zu beaufschlagenden Gleitring.

Ein Anwendungsgebiet der Erfindung ist bei Gleitringdichtungsanordnungen für die Abdichtung der Antriebswelle von Kältemittelkompressoren für die Verdichtung eines Kältemittels, wie CO₂, wie sie z.B. bei Klimaanlagen im Automobilbau zum Einsatz kommen. Es versteht sich jedoch, dass die Erfindung nicht auf das genannte Anwendungsgebiet beschränkt ist, sondern Vorteile immer dann bietet, wenn die Montage einer Gleitringdichtungsanordnung automatisch, z.B. mittels sog. Robotermontageautomaten, vorgenommen werden soll.

Der grundsätzliche Aufbau einer Gleitringdichtungsanordnung ist dem Fachmann bekannt und braucht an dieser Stelle nicht näher erläutert zu werden. Es kann z.B. auf die DE-U-20120966.7 verwiesen werden, die damit in die vorliegende Offenbarung der Erfindung einbezogen ist. Für die Zwecke der vorliegenden Erfindung genügt der Hinweis, dass eine Gleitringdichtungsanordnung, bei der die Erfindung zur Anwendung kommen kann, wenigstens ein Paar zusammenwirkende Gleitringe umfasst, von denen einer zur drehfesten Montage an einem Gehäuse, z.B. einem Kompressorgehäuse, und der andere zur gemeinsamen Drehung mit einer Welle vorgesehen ist. Die Gleitringe haben einander zugewandte radiale Dichtflächen, um einen Bereich aussenumfänglich gegenüber einem Bereich innenumfänglich der Dichtflächen abzudichten. Bei Betrieb kann zwischen den Dichtflächen ein Dichtspalt gebildet sein, der einen berührungslosen Lauf der Gleitringdichtungsanordnung ermöglicht. Es können hierbei förderwirksame Ausnehmungen in den Dichtflächen eingebracht sein. Die abdichtende Wirkung kann jedoch auch durch eine berührende Eingriffnahme der Dichtflächen zustande kommen.

Die Erfindung bezieht sich auf eine Vorpanneinrichtung zur axialen Beaufschlagung des rotierenden Gleitringes, der in der Zeichnung das allgemeine Bezugszeichen 1 trägt, mit einer geeigneten Vorspannkraft, um den rotierenden Gleitring gegen den stationären Gleitring (nicht gezeigt) zu pressen.

Die Vorspanneinrichtung trägt in der Zeichnung das allgemeine Bezugszeichen 2 und umfasst eine Vorspannfeder 3, bei der es sich vorzugsweise um eine Wellenfeder handelt, die mit einem axialen Ende an einem ersten Stützring oder Stützelement 4 und an ihrem anderen axialen Ende an einem zweiten Stützring oder Stützelement 5 abgestützt ist. Das erste Stützelement 4 ist so ausgelegt, dass der Gleitring 1 daran montiert werden kann, wobei gleichzeitig eine Drehkraft von der Montageeinheit 2 auf den Gleitring 1 übertragen wird, worauf später noch näher eingegangen wird.

Vorzugsweise sind beide Stützelemente 4, 5 ringscheibenförmig ausgebildet oder besitzen wenigstens einen radialen Basisbereich 4', 5' mit einer ringscheibenförmigen Ausbildung (nur derjenige des ersten Stützelementes 4 ist gezeigt). Dies gewährleistet nicht nur eine gute axiale Abstützung der Vorspannfeder 3 an den einander zugewandten Stirnseiten der Stützelemente 4, 5, sondern dies ermöglicht ferner auch, dass wenn das erste Stützelement 4 an der zugewandten Stirnseite des Gleitringes 1 anliegt, eine im Gleitring 1 eingebrachte und sich gegen das Stützelement 4 öffnende axiale Ausnehmung (nicht gezeigt), in der ein Sekundärdichtungselement (nicht gezeigt) in Gestalt z.B. eines O-Ringes angeordnet sein kann, axial abgedeckt wird, so dass das Sekundärdichtungselement an einem Herausgelangen aus der Ausnehmung gehindert ist.

Wie dargestellt ist, sind vorzugsweise Mittel an der Montageeinheit 2 vorgesehen, um die Vorspannfeder 3 zu zentrieren bzw. in einer ausgerichteten Beziehung zur Mittelängsachse zu halten. Vorzugsweise umfasst zu diesem Zweck das dem Gleitring 1 abgewandte zweite Stützelement 5 einen axial davon abstehenden Umfangsflansch 6, der in seinen radialen Abmessungen so bemessen ist, dass er einen benachbarten Bereich der Vorspannfeder 3 aussenumfänglich zentrierend umfassen kann, ohne deren Federweg zu beinträchtigen. Wenn erwünscht, könnte anstelle davon oder zusätzlich dazu eine derartige Zentrierungsanordnung auch am ersten Gleitring 4 vorgesehen sein. Der Umfangsflansch 6 kann eine kontinuierliche oder unterbrochenen Ausbildung haben.

Von diametral gegenüber liegenden Bereichen des äusseren Umfangs des zweiten Stützelementes 5 stehen ein Paar Arme oder Halterungen 7, 8 axial in Richtung auf das erste Stützelement 4 ab. Jeder Arm 7, 8 trägt nahe seinem äusseren axialen Ende einen radial nach innen ragenden Vorsprung 9, 10. Die diametral gegenüber liegenden Vorsprünge 9, 10 schaffen Anschläge für das erste Stützelement 4, an denen dieses anliegen kann, um die axiale Bewegung der Stützelemente 4, 5 weg voneinander zu begrenzen. Bei den Vorsprüngen 9, 10 handelt sich vorzugsweise um aus dem Material der Arme 7, 8 ausgeprägte Sicken oder Buckel, doch können auch andere Formen von Vorsprüngen, einschliesslich solcher, die nicht einstückig mit den Armen verbunden sind, vorgesehen sein.

Zur Ausbildung der, wie vorbeschrieben aufgebauten Vorspanneinrichtung 2 als Montageeinheit ist erfindungsgemäss der axiale Abstand der Vorsprünge 9, 10 von der zugewandten Stirnseite des zweiten Stützelementes 5, an dem die Arme 7, 8 angebracht sind, so bemessen, dass die Vorspannfeder 3 um ein geeignetes geringes Mass axial zusammengedrückt ist, wenn das erste Stützelement 4 an den Vorsprüngen 9, 10 anliegt. Hierdurch wird einerseits der Zusammenhalt der Stützelemente 4, 5 und der dazwischen wirkenden Vorspannfeder 3 zu einer in automatischen Fertigungsanlagen zu handhabenden Montageeinheit geschaffen, d.h. bevor die Montageeinheit zum Einbau an einer Gleitringdichtungsanordnung kommt, und andererseits kann die Vorspannfeder 3 nach der Montage an einer Gleitringdichtungsanordnung bis zu einem geeigneten Mass weiter komprimiert werden, um eine gewünschte Betriebs-Vorspannkraft auf den Gleitring 1 auszuüben. Ferner erspart diese Massnahme eine feste Verbindung zwischen der Vorspannfeder 3 und den oder einem der Stützelemente 4, 5. Die Betriebs-Vorspannkraft ist wesentlich grösser als die Axialkraft, die die Vorspannfeder 3 auf die Stützelemente 4, 5 vor Einbau der Montageeinheit ausübt. Der besagte axiale Abstand zwischen den Vorsprüngen 9, 10 und dem zweiten Stützelement 5 muss daher grösser als ein maximaler Betriebsabstand sein, den die Stützelemente 4, 5 bei Betrieb der Gleitringdichtungsanordnung einnehmen können, so dass das erste Stützelement 4 stets ausser Eingriff mit den Vorsprüngen 9, 10 kommt, wenn im Zuge des Einbaus der Montageeinheit die Vorspannfeder 3 bis zur Abgabe der gewünschten Betriebs-Vorspannkraft zusammengedrückt wird. Es ist so gewährleistet, dass sich bei Betrieb die Stützelemente 4, 5 relativ zueinander axial bewegen können. Der maximale Betriebsabstand ist durch die Einbaubedingungen der jeweiligen Gleitringdichtungsanordnung vorgegeben.

Es versteht sich, dass die Arme mit den Vorsprüngen auch am ersten Stützelement 4 vorgesehen sein könnten. Ferner können, wenn erwünscht, mehr als zwei Arme mit Vorsprüngen, z.B. drei oder mehr in gleichen Winkelabstand voneinander angeordnete Arme vorgesehen sein.

Um bei Betrieb die freie axiale Relativbewegung der Stützelemente 4, 5 zu gewährleisten, sind im äusseren Umfang des Gleitringes 1 axial zu den Armen 7, 8 ausgerichtete Nuten oder Aussparungen 11, 12 (nur eine Aussparung ist in der Zeichnung gezeigt) an diametral gegenüberliegenden Bereichen vorgesehen, in denen die Arme 7, 8 axial beweglich aufgenommen sind, wenn die Vorspannfeder 3 auf eine Betriebs-Vorspannkraft zusammengedrückt ist und sich der Gleitring 1 in seiner Betriebsstellung befindet, bei der er mit einer benachbarten Stirnseite an dem ersten Stützelement 4 anliegt. Gleichzeitig wird hierdurch eine formschlüssige Kupplung zwischen den Teilen zur Übertragung einer Drehkraft erhalten.

Zur Montage des Gleitringes 1 an der Montageeinheit steht ein Paar Spangen oder Klemmen 13, 14 von diametral gegenüberliegende Bereichen des äusseren Umfangs des ersten Stützelementes 4 in Richtung auf den Gleitring 1 ab. Die Klemmen 13, 14 können in dazu axial ausgerichtete zweite Aussparungen 15, 16 im äussere Umfang des Gleitringes 1 eingreifen, was eine radiale Spreizung der Klemmen 13, 14 voraussetzt. Die Klemmen 13, 14 üben daher auf den Gleitring 1 eine radiale Klemm-Haltekraft aus, und ferner bilden die in den Aussparungen 15, 16 einliegenden Klemmen 13, 14 eine weitere formschlüssige Kupplung zwischen den Teilen zur Übertragung einer Drehkraft.

Obschon es in der Zeichnung nicht dargestellt ist, sind am zweiten Stützelement 5 Mittel vorgesehen, um das Stützelement 5 mit eine Welle zur gemeinsamen Drehung zu verbinden. Dazu kann die Wellendurchgangsbohrung im zweiten Stützelement 5 mit einem so genannten Zwei- oder Mehrkant versehen sein, der mit einem entsprechend komplementär kantig ausgebildeten Bereich der Welle in formschlüssigem Eingriff treten kann. Andere diesem Zweck dienende Kupplungsmittel können ebenfalls vorgesehen werden.

Die Stützelemente 4, 5 mit den Armen 7, 8 bzw. Klemmen 13, 14 stellen vorzugsweise durch Stanzen und Biegen gebildete Formteile aus einem metallischen Blechmaterial dar.

Der Gleitring kann vor Einbau in eine Gleitringdichtungsanordnung an der, wie vorbeschrieben, als Montageeinheit ausgebildeten Vorspanneinrichtung angeklemmt werden, oder es wird die Vorspanneinrichtung nachträglich an einem schon montierten Gleitring angesetzt.

## Patentansprüche

1. Vorspanneinrichtung für eine Gleitringdichtungsanordnung mit einem Paar zusammenwirkender Gleitringe, von denen einer mit einer Vorspannkraft gegen den anderen vorgespannt ist, umfassend ein Paar axial voneinander beabstandete, axial relativ zueinander bewegbare Stützelemente (4,5) für eine dazwischen angeordnete Vorspannfeder (3), wobei Vorsprungsmittel (9,10) an einem der Stützelemente vorgesehen sind, mit denen das andere Stützelement in Eingriff bringbar ist, die in einem axialen Abstand von dem einen Stützelement stehen, der grösser als ein bestimmter maximaler axialer Betriebsabstand der Stützelemente nach Einbau der Vorspanneinrichtung in die Gleitringdichtungsanordnung ist, um die axiale Bewegung der Stützelemente in einer Richtung weg voneinander zu begrenzen, **gekennzeichnet durch** Halteklemmen (13,14) an einem der Stützelemente (4,5) zur reibschlüssigen klemmenden Eingriffnahme mit dem vorzuspannenden Gleitring (1) und zu von dem anderen Stützelement (5) in Richtung auf das eine Stützelement (4) sich axial erstreckenden Halterungen (7,8) ausgerichtete erste Aussparungen (11,12) im vorzuspannenden Gleitring (1), in denen die Halterungen (7,8) axial beweglich aufnehmbar sind.

2. Vorspanneinrichtung nach Anspruch 1, **dadurch gekennzeichnet, dass** die Halteklemmen (13,14) in dazu ausgerichteten zweiten Aussparungen (15,16) des vorzuspannenden Gleitringes (1) aufnehmbar sind.

3. Vorspanneinrichtung nach Anspruch 1 oder 2, **dadurch gekennzeichnet, dass** diese als Montageeinheit ausgebildet ist, indem die Vorsprungsmittel (9,10) ferner in einem solchen axialen Abstand von dem einen Stützelement (5) vorgesehen sind, dass dieser kleiner als die axiale Länge der Vorspannfeder (3) im entspannten Zustand ist.

4. Vorspanneinrichtung nach Anspruch 1, 2 oder 3, **dadurch gekennzeichnet, dass** wenigstens ein Paar Vorsprünge (9,10) an den diametral gegenüberliegenden Halterungen (7,8) vorgesehen sind.

5. Vorspanneinrichtung nach einem der vorhergehenden Ansprüche, **dadurch gekennzeichnet, dass** wenigstens eines der Stützelemente (4,5) Mittel (6) zur Zentrierung der Vorspannfeder (3) aufweist.

6. Vorspanneinrichtung nach einem der vorhergehenden Ansprüche, **dadurch gekennzeichnet, dass** die Mittel zur Zentrierung der Vorspannfeder (3) ein am betreffenden Stützelement (5) vorgesehener kontinuierlicher oder unterbrochener Zentrierungsflansch (6) ist, der einen benachbarten Endbereich der Vorspannfeder aussenumfänglich umfasst.

7. Vorspanneinrichtung nach einem der vorhergehenden Ansprüche, **dadurch gekennzeichnet, dass** die Vorspannfeder eine Wellenfeder (3) umfasst.

8. Vorspanneinrichtung nach einem der vorhergehenden Ansprüche, **dadurch gekennzeichnet, dass** wenigstens ein Basisbereich (4',5') jedes Stützelementes (4,5) ringscheibenförmig ausgebildet ist

9. Vorspanneinrichtung nach einem der vorhergehenden Ansprüche, **dadurch gekennzeichnet, dass** jedes Stützelement (4,5) ein Stanzteil aus einem metallischen Material ist.

## Claims

1. A biasing device of a face seal assembly having a pair of co-operating seal rings, one of said seal rings being biased under a biasing force against the other seal ring, said biasing device including a pair of axially spaced support elements (4,5) which are axially movable relatively to each other, for a bias spring (3) disposed between said support elements, and protrusion means (9,10) provided on one of said support elements, with which said other support element is engageable for limiting the axial movement of the support elements in a direction away from one another, said protrusion means being axially spaced from said one support element by a distance larger than a predetermined maximum axial operational spacing of the support elements after installation of the biasing device on the face seal assembly, **characterized by** retaining clamps (13,14) on one of said support elements (4,5) for frictional engagement in clamping manner with said one seal ring (1) the biasing force is applied to, said one seal ring (1) the biasing force is applied to including first recesses (11,12) oriented in a direction of holders (7,8) axially extending from said other support element (5) towards said one support element (4), said holders (7,8) can be accomodated in said recesses in axially movable manner.

2. The biasing device according to claim 1, **characterized in that** said retaining clamps (13,14) can be accomodated in second recesses (15,16) of said one seal ring (1) the biasing force is applied to, said second recesses being oriented to said retaining clamps.

3. The biasing device according to claim 1 or 2, **characterized in that** the biasing device being formed as a mounting unit **in that** said protrusion means (9,10) are provided at an axial distance from said one support element (5), which is smaller than the axial length of the bias spring (3) in a relaxed state.

4. The biasing devics according to claim 1, 2 or 3, **characterised in that** at least a pair of protrusions (9,10) being provided on diametrically opposite holders (7,8).

5. The biasing device according to anyone of the preceding claims, **characterised in that** at least one of said support elements (4,5) comprises means (6) for centering the bias spring (3).

6. The biasing device according to anyone of the preceding claims, **characterised in that** said means for centering the bias spring (3) includes a continuous or discontinuous centering flange (6) provided on the support element (5) concerned, said centering flange peripherally surrounding an adjacent end portion of the bias spring.

7. The biasing device according to anyone of the preceding claims, **characterised in that** the bias spring comprises a wave spring (3).

8. The biasing device according to anyone of the preceding claims, **characterised in that** at least a base portion (4',5') of each support element (4,5) is in the form of an annular washer.

9. The biasing device according to anyone of the preceding claims, **characterised in that** each support element (4,5) is a part of metallic material made by punching.

## Revendications

1. Dispositif de précontrainte pour une garniture mécanique d'étanchéité dotée d'une paire de bagues glissantes coopérantes dont l'une est précontrainte contre l'autre avec une force de précontrainte, comprenant une paire d'éléments de soutien (4, 5), axialement distants et axialement mobiles l'un par rapport à l'autre, pour un ressort de précontrainte (3) disposé entre eux, sachant que des moyens formant saillies (9, 10) sont prévus sur un des éléments de soutien, moyens avec lesquels l'autre élément de soutien peut être amené en engagement et qui se trouvent à une distance axiale du premier cité des éléments de soutien qui est supérieure à une distance axiale maximale donnée en service entre les éléments de soutien à la suite de l'installation du dispositif de précontrainte dans la garniture mécanique d'étanchéité, afin de limiter le mouvement axial des éléments de soutien en éloignement l'un de l'autre, **caractérisé par** des pinces de retenue (13, 14) sur un des éléments de soutien (4, 5) pour l'engagement de serrage par friction avec la bague glissante (1) à précontraindre, et par des premiers évidements (11, 12) dans la bague glissante (1) à précontraindre, évidements qui sont alignés avec des brides (7, 8) s'étendant axialement depuis l'autre élément de soutien (5) en direction du premier cité (4) des éléments de soutien, et dans lesquels les brides (7, 8) peuvent être reçues à déplacement axial.

2. Dispositif de précontrainte selon la revendication 1, **caractérisé en ce que** les pinces de retenue (13, 14) peuvent être reçues dans des deuxièmes évidements (15, 16) de la bague glissante (1) à précontraindre qui sont alignés avec elles.

3. Dispositif de précontrainte selon la revendication 1 ou 2, **caractérisé en ce qu'**il est conçu comme un ensemble monté, par le fait que les moyens formant saillies (9, 10) sont en outre prévus à une distance axiale telle de l'un (5) des éléments de soutien que cette distance est inférieure à la longueur axiale du ressort de précontrainte (3) à l'état relâché.

4. Dispositif de précontrainte selon la revendication 1, 2 ou 3, **caractérisé en ce qu'**au moins une paire de saillies (9, 10) sont prévus sur les brides (7, 8) diamétralement opposées.

5. Dispositif de précontrainte selon l'une des revendications précédentes, **caractérisé en ce qu'**au moins un des éléments de soutien (4, 5) présente un moyen (6) pour centrer le ressort de précontrainte (3).

6. Dispositif de précontrainte selon l'une des revendications précédentes, **caractérisé en ce que** le moyen (6) pour centrer le ressort de précontrainte (3) est un collet de centrage (6) continu ou interrompu prévu sur l'élément de soutien concerné (5), collet qui entoure sur sa périphérie extérieure une région terminale voisine du ressort de précontrainte.

7. Dispositif de précontrainte selon l'une des revendications précédentes, **caractérisé en ce que** le ressort de précontrainte est un ressort ondulé (3).

8. Dispositif de précontrainte selon l'une des revendications précédentes, **caractérisé en ce qu'**au moins une région de base (4', 5') de chaque élément de soutien (4, 5) est réalisée en forme de couronne.

9. Dispositif de précontrainte selon l'une des revendications précédentes, **caractérisé en ce que** chaque élément de soutien (4, 5) est une pièce découpée en matériau métallique.
